Europäisches Patentamt

European Patent Office

Office européen des brevets

(19)

(11) Veröffentlichungsnummer: **0 016 302**
**B1**

(12) **EUROPÄISCHE PATENTSCHRIFT**

(45) Veröffentlichungstag der Patentschrift: **08.02.84**

(21) Anmeldenummer: **80100140.5**

(22) Anmeldetag: **11.01.80**

(51) Int. Cl.³: **G 01 F 1/28**, C 03 B 37/07, C 03 B 37/02

(54) **Verfahren und Vorrichtung zur Ermittlung des Durchflusses einer in frei fallendem Strahl aus einer Öffnung austretenden, insbesondere hochviskosen Flüssigkeit.**

(30) Priorität: **16.01.79 DE 2901558**

(43) Veröffentlichungstag der Anmeldung:
**01.10.80 Patentblatt 80/20**

(45) Bekanntmachung des Hinweises auf die Patenterteilung:
**08.02.84 Patentblatt 84/6**

(84) Benannte Vertragsstaaten:
**DE FR SE**

(56) Entgegenhaltungen:
**FR - A - 2 383 138**
**GB - A - 162 874**
**GB - A - 271 846**
**US - A - 3 582 298**
**US - A - 3 817 101**
**US - A - 4 144 044**

**R. KAUTSCH: "Messelektronik nichtelektrischer Grössen, Teil 3, Messgrössen und Messeinrichtungen, Hans Holzmann Verlag KG, Bad Wörishofen, Seite 210**

(73) Patentinhaber: **SIEMENS AKTIENGESELLSCHAFT Berlin und München Wittelsbacherplatz 2 D-8000 München 2 (DE)**

(72) Erfinder: **Walter, Hildebrand, Dr. Dipl.-Ing. Im Fuchsberg 10 D-7573 Sinzheim (DE)**

Verfahren und Vorrichtung zur Ermittlung des Durchflusses einer in frei fallendem Strahl aus einer Öffnung austretenden, insbesondere hochviskosen Flüssigkeit

Die Erfindung bezieht sich auf ein Verfahren und eine Vorrichtung zur Ermittlung des Durchflusses einer in frei fallendem Strahl aus einer Öffnung austretenden, insbesondere hochviskosen Flüssigkeit.

Neben anderen Meßmethoden lassen sich Durchflußmengen von Flüssigkeiten in bekannter Weise nach dem Schwebekörper-Verfahren kontinuierlich bestimmen, wobei die von der strömenden Flüssigkeit auf einen in einer Rohrleitung bekannten Querschnitts befindlichen Schwebekörper ausgeübte Kraft gemessen und in ein durchflußmengenproportionales Signal umgeformt wird, siehe R. Kautsch: "Meßelektronik nichtelektrischer Größen", Seite 210, Abs. 5.5.

Ein Beispiel einer derartigen Meßeinrichtung findet sich auch in der GB—A— 162 874, wo der Schwebekörper als Kugel ausgebildet, in einem fluiddurchströmten Rohr angeordnet und über einen Faden an dem Hebelarm einer Balkenwaage befestigt ist, deren Ausschlag ein Maß für die Durchflußmenge ist.

Zur Führung von industriellen Herstellungsprozessen, in denen zähe, aus Öffnungen, wie Düsen oder dergleichen, austretende Flüssigkeiten, z. B. Öle, Leim, schmelzflüssiges Glas, verwendet werden, sind die bekannten Meßmethoden und -einrichtungen zur Gewinnung eines den Volumen- oder Massenstrom abbildenden Meßsignals nicht geeignet.

Bekanntlich läßt sich der Durchfluß als Produkt der mittleren Strömungsgeschwindigkeit der Flüssigkeit und der Querschnittsfläche der Durchflußöffnung bzw. der Flüssigkeitssäule darstellen.

Die Gewinnung von diesen Faktoren entsprechenden Meßgrößen bei einem frei fallenden Strahl einer Flüssigkeit, insbesondere hoher Temperatur und/oder hoher Viskosität, ist als Aufgabe gestellt.

Eine Lösung dieser Aufgabe wird in einem Verfahren gesehen, welches die Merkmale des Anspruchs 1 aufweist.

Anstelle der unter den gegebenen Meßbedingungen nur schwierig zu ermittelnden mittleren Strömungsgeschwindigkeit wird also die mit ihr in funktionellem Zusammenhang stehende, mittlere Kraftwirkung gemessen, die der frei fallende Strahl auf einen körperlichen Strömungswiderstand ausübt.

Die Bestimmungsgleichung für den Durchfluß Q mit der Funktion $f_1(K)$ und der Funktion $f_2(D)$ als Faktoren läßt sich mittels Regressionsrechnung aus der Kraftwirkung K und dem Strahldurchmesser D darstellen. Dabei werden die stoff- oder prozeßspezifischen Koeffizienten der Reihen empirisch ermittelt und in einem Funktionsrechner hinterlegt.

Bei einer Vorrichtung zur Durchführung des Verfahrens zur Ermittlung des Durchflusses kann die Meßgröße "Kraftwirkung" mit Hilfe eines in dem frei fallenden Strahl befindlichen Körpers, der als Aufnehmer eines mechanisch-elektrischen Kraftmeßumformers wirkt, ermittelt werden.

Zur Messung des Strahldurchmessers kann eine optische Meßeinrichtung, bevorzugt eine Diodenzeilenkamera genügend hoher Auflösung, eingesetzt werden.

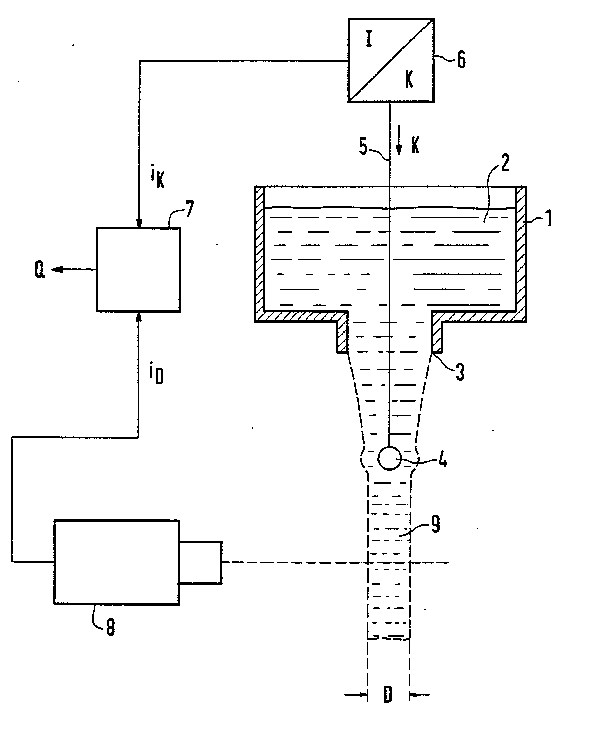

Zur Erläuterung der Erfindung ist in der Figur schematisch ein Ausführungsbeispiel dargestellt und im folgenden beschrieben.

In einem trogartigen Speiser 1 einer Glasverarbeitungsanlage befindet sich schmelzflüssiges Glas 2, welches aus einer düsenartigen Öffnung 3 im Boden des Speisers 1 in frei fallendem Strahl 9 zur weiteren Verarbeitung austritt.

In diesem befindet sich ein Widerstandskörper 4 in Form einer Kugel, deren Durchmesser kleiner ist als der Strahldurchmesser D. Der Widerstandskörper 4, also die Kugel, ist an einem hitzebeständigen, koaxial zur Strahlachse angeordneten Draht 5, z. B. aus Platin, befestigt, welcher mit seinem anderen Ende an dem Meßglied eines mechanisch-elektrischen Kraftmeßumformers 6 oberhalb des Speisers 1 angeschlossen ist. Die von dem frei fallenden Strahl 9 des schmelzflüssigen Glases 2 auf den Körper 4 ausgeübte Kraftwirkung K wird in dem Kraftmeßumformer 6 in ein proportionales elektrisches Signal, beispielsweise einen Strom $i_K$, umgewandelt und als eine Eingangsgröße einem Funktionsrechner 7 zugeführt. Die andere Eingangsgröße des Funktionsrechners 7 ist ein dem Strahldurchmesser D entsprechender Strom $i_D$, welcher mit Hilfe einer Diodenzeilenkamera 8 gewonnen wird, die in genügendem Abstand von dem etwa 1000°C heißen und deshalb selbstleuchtenden Glasstrahl angeordnet ist und diesen in einer Radialebene abtastet. In dem Funktionsrechner 7 wird mit Hilfe der empirisch gewonnenen Durchflußfunktion aus der der auf den Körper 4 ausgeübten Kraft K und dem Strahldurchmesser D entsprechenden elektrischen Größen $i_K$ und $i_D$ ein dem Durchfluß Q entsprechendes Signal errechnet und ausgegeben, welches beispielsweise als Regelgröße zur Regelung des Durchflusses durch die Öffnung 3 verwendet werden kann.

**Patentansprüche**

1. Verfahren zur Ermittlung des Durchflusses einer in frei fallendem Strahl aus einer Öffnung austretenden, insbesondere hochviskosen Flüssigkeit, dadurch gekennzeichnet, daß aus den kontinuierlich gemessenen Größen der Kraftwirkung (K) des frei fallenden Strahles (9) auf einen Widerstandskörper (4) und des Durchmessers (D) des Strahls mit Hilfe einer

empirisch ermittelten Durchflußfunktion

$$Q = f_1(K) \cdot f_2(D)$$

der Durchfluß Q errechnet wird, wobei die Funktionen $f_1(K)$ und $f_2(D)$ aus einer Reihe von diskreten Meßwerten bestimmt werden.

2. Vorrichtung zur Ermittlung des Durchflusses einer in frei fallendem Strahl aus einer Öffnung austretenden, insbesondere hochviskosen Flüssigkeit zur Durchführung des Verfahrens nach Anspruch 1, gekennzeichnet durch einen in dem frei fallenden Strahl (9) befindlichen Widerstandskörper (4) als Meßwertaufnehmer eines mechanisch elektrischen Meßumformers (6) und eine optische Meßvorrichtung (8) zur Messung des Strahldurchmessers (D).

3. Einrichtung nach Anspruch 2, dadurch gekennzeichnet, daß der Widerstandskörper (4) eine Kugel ist mit einem Durchmesser kleiner als der Strahldurchmesser (D) und daß die Kugel mittels eines koaxial zur Strahlachse angeordneten Drahts (5) mit dem Meßglied des Kraftmeßumformers (6) verbunden ist.

4. Einrichtung nach Anspruch 2, gekennzeichnet durch eine Diodenzeilenkamera (8) zur Messung des Strahldurchmessers (D).

## Claims

1. A process for determining the flow of a liquid in particular a highly viscous liquid, issuing from an opening as a freely falling stream, characterised in that the flow Q is calculated from the continuously measured magnitudes of the force (K) exerted by the freely falling stream (9) upon a resistance body (4) and of the diameter (D) of the stream with the aid of an empirically determined flow function

$$Q = f_1(K) \cdot f_2(D),$$

the functions $f_1(K)$ and $f_2(D)$ being determined from a number of discrete measured values.

2. Apparatus for determining the flow of a liquid in particular a highly viscous liquid, issuing from an opening as a freely falling stream, which apparatus serves to carry out the process according to Claim 1, characterised by a resistance body (4), which is located in the freely falling stream (9), as a measured value receiver of a mechanical-electric measuring transducer (6), and by an optical measuring device (8) for measuring the diameter (D) of the stream.

3. Apparatus according to Claim 2, characterised in that the resistance body (4) is a ball having a smaller diameter than the diameter (D) of the stream; and that the ball is connected to the measuring element of the force measuring transducer (6) by means of a wire (6) which is coaxially arranged with respect to the stream axis.

4. Apparatus according to Claim 2, characterised by a diode line camera (8) for measuring the diameter (D) of the stream.

## Revendications

1. Procédé de détermination du débit d'un jet tombant en chute libre d'une ouverture, notamment d'un liquide très visqueux, caractérisé en ce qu'il consiste à calculer le débit Q à partir des valeurs mesurées en continu de l'effet dynamique (K) du jet (9) tombant en chute libre sur un corps de résistance à l'écoulement (4) et du diamètre (D) de jet à l'aide d'une fonction de débit déterminée empiriquement

$$Q = f_1(K) \cdot f_2(D)$$

les fonctions $f_1(K)$ et $f_2(D)$ étant déterminées à partir d'une série de valeurs de mesure discrètes.

2. Dispositif de détermination du débit d'un jet tombant en chute libre d'une ouverture, notamment d'un liquide très visqueux, pour la mise en oeuvre du procédé suivant la revendication 1, caractérisé par un corps de résistance à l'écoulement (4), se trouvant dans le jet (9) tombant en chute libre, et servant de capteur de valeurs de mesure d'un transducteur (6) mécanique électrique et par un dispositif optique de mesure (8) destiné à mesurer le diamètre (D) du jet.

3. Dispositif suivant la revendication 2, caractérisé en ce que le corps de résistance à l'écoulement (4) est une bille ayant un diamètre plus petit que le diamètre (D) du jet et en ce que la bille est reliée à l'organe de mesure du transducteur dynamométrique (6) au moyen d'un fil (5) disposé dans l'axe du jet.

4. Dispositif suivant la revendication 2, caractérisé par une caméra à lignes de diodes (8) pour mesurer le diamètre (D) du jet.